# EUROPÄISCHE PATENTANMELDUNG

(11) **EP 0 557 916 A2**
(43) Veröffentlichungstag der Anmeldung: **01.09.1993**
(21) Anmeldenummer: 93102717.1
(22) Anmeldetag: 20.02.1993
(51) Int. Cl.: B09B 3/00

(54) **Aufarbeitung von beladenen Filtern**

(30) Priorität: 28.02.1992 DE 4206312
(71) Anmelder: SOLVAY UMWELTCHEMIE GmbH, D-30173 Hannover (DE); Solvay Fluor und Derivate GmbH, D-30173 Hannover (DE)
(72) Erfinder: Swidersky, Hans-Walter, W-3000 Hannover 1 (DE); Legat, Werner, W-3000 Hannover 51 (DE); Born, Thomas, W-3201 Holle 5 (DE)
(74) Vertreter: Lauer, Dieter, Dr.

(57) **Zusammenfassung**

Beschrieben wird die umweltschonende Aufarbeitung von Mineralfasern enthaltenden beladenen Filtern, beispielsweise von mit Bleistäuben beladenen Filterkassetten, bei welchem die Mineralfaser durch Zersetzung mit einer Fluor enthaltenden Säure von der Beladung getrennt wird.

## Beschreibung

Die Erfindung bezieht sich auf ein verfahren zur Aufarbeitung von beladenen Filtern, die Mineralfasern enthaltende Filtermedien aufweisen.

Besonders zur Reinigung staubbeladener Abluft werden Filtersysteme eingesetzt, die Mineralfasern enthaltende Filtermedien aufweisen. Infolge der sich ausbildenden Staubbeladung haben diese Filter begrenzte Standzeiten. Die Beladung besteht in der Regel aus gefährlichen Stäuben, beispielsweise aus Stäuben, die Blei oder Bleiverbindungen wie Bleioxide enthalten.

Als derartige Filter werden häufig Filterkassetten ("Absolutfilterkassetten") eingesetzt. Diese Filterkassetten weisen ein Gehäuse auf, das gewöhnlich aus verzinktem Stahlblech besteht. Die Filter weisen weiterhin Separatoren in Form von Folien aus Reinaluminium auf. Das Filtermedium besitzt gewöhnlich ein Kunststoffgewebe als Grundlage, das mit Mineralfasern, insbesondere Mikroglasfasern, belegt ist. Weiterhin weisen die Kassetten Vergußmassen und Dichtguumis auf.

Wegen der üblicherweise gefährlichen Beladung der Kassetten müssen diese auf Sondermülldeponien abgelagert werden. Es ist bereits bekannt, nach der Zerlegung der Kassette insbesondere die mit Blei oder anderen Schwermetallen beladenen Filtermedien aufzuarbeiten. Dabei wird aber lediglich der mechanisch abtrennbare Metallstaub in den jeweiligen Metallgewinnungsprozeß rückgeführt. Der von den Filtern nicht abtrennbare Metallstaub wird zusammen mit den Filtern deponiert.

Aufgabe der vorliegenden Erfindung ist es, ein umweltverträgliches verbessertes Verfahren zur Aufarbeitung von beladenen Filtern, die Mineralfasern enthaltende Filtermedien aufweisen, anzugeben. Diese Aufgabe wird durch das in den Ansprüchen angegebene Verfahren gelöst.

Das erfindungsgemäße Verfahren zur Aufarbeitung von beladenen Filtern, die Mineralfasern enthaltende Filtermedien aufweisen, ist dadurch gekennzeichnet, daß man die Mineralfasern mit einer Fluor enthaltenden anorganischen Säure oder einer wäßrigen Lösung eines sauren Alkali- oder Ammoniumsalzes einer solchen Säure zersetzt und die Beladung von der Reaktionsmischung abtrennt. Dabei fällt ein hochangereichertes Schwermetallkonzentrat an, welches nur noch aus dem Schwermetall bzw. Schwermetallverbindungen besteht.

Als Zersetzungsmittel verwendet man vorzugsweise wäßrige Flußsäure, insbesondere in Form einer 5 bis 40 Gew.-% HF enthaltenden Flußsäure.

Mit dem erfindungsgemäßen Verfahren kann man Filter aufarbeiten, die beispielsweise mit Schwermetallen wie Blei, Cadmium, Zink, Kupfer oder deren Verbindungen beladen sind. Besonders gut geeignet ist das erfindungsgemäße Verfahren zur Aufarbeitung von Blei als Beladung aufweisenden Filtern. Dabei werden die Mineralfasern, beispielsweise Mikroglasfasern bei der Zersetzung in Lösung überführt. Das Blei setzt sich ab oder wird als schwerlösliche Verbindung, z.B. Bleifluorid ausgefällt. Gewünschtenfalls kann man die Zersetzung in Anwesenheit eines Fällungsmittels für Blei, vorzugsweise Schwefelsäure, durchführen.

Die Umsetzung kann durch Ultraschall noch gefördert werden.

Gewünschtenfalls kann man der Reaktionsmischung Mineralsäuren zusetzen, z.B. Salzsäure oder Salpetersäure. Vorteilhaft kann auch der Zusatz von Oxidationsmitteln, z.B. oxidierenden Mineral-Säuren wie Salpetersäure sein.

Besonders gut geeignet ist das erfindungsgemäße Verfahren zur Aufarbeitung von mit Blei beladenen Filterkassetten ("Absolutfilterkassetten"). Dabei werden die mit Bleistaub beladenen Filterkassetten zunächst in die Bestandteile zerlegt. Dabei erhaltener Metallschrott und Kunststoff kann wiederverwertet werden. Das Filtermedium aus Kunststoffgewebe und Mikroglasfaser oder Asbestfaser, das mit Blei (oder Bleiverbindungen) beladen ist, wird mit dem Zersetzungsmittel, vorzugsweise wäßriger Flußsäure, behandelt. Dabei bleibt das Kunststoffgewebe unverändert, die Mikroglasfaser gehen in Lösung. Das vorhandene Blei, seine Verbindungen bzw. das entstehende Bleifluorid setzt sich ab und kann vom Kunststoffgewebe und der Lösung abgetrennt werden. Blei, Bleiverbindungen bzw. Bleifluorid oder die unter Zusatz eines Fällungsmittels erhaltene Bleiverbindung können in eine Bleihütte zur weiteren Verwertung gegeben werden. Die abgetrennte Flußsäurelösung kann gegebenenfalls nach Aufstärkung wiederverwendet oder neutralisiert und deponiert oder unter Zusatz von Verfestigungsmitteln zu Baustoffen umgewandelt werden. Das Filtermedium kann gewünschtenfalls wiederverwertet werden.

Das erfindungsgemäße Verfahren bietet eine Methode, die eine umweltschonende, vollständige Verwertung des im Filtermedium enthaltenen Filterstaubes gestattet.

Das folgende Beispiel soll die Erfindung weiter erläutern, ohne sie in ihrem Umfang einzuschränken.

### Beispiel: Aufarbeitung von mit Bleistaub beladenen Absolutfilterkassetten.

Die Filterkassetten wurden zunächst in ihre Bestandteile zerlegt. Das mit Blei und Bleioxid beladene, Mikroglasfasern enthaltende Filtermedium wurde mit wäßriger, 20 Gew.-% HF enthaltender Flußsäure kontaktiert. Die Mikroglasfasern des Filtermediums löste sich auf. Das verbleibende Kunststoffgewebe konnte aus der Reaktionsmischung herausgehoben und nach Abspülen und Trocknen einem Recyclingprozeß zugeführt werden. Aus der Reaktionsmischung konnte ein überwiegend aus Blei, Bleioxid und Bleifluorid bestehender Schlamm durch Filtration isoliert werden, der in eine Bleihütte zur weiteren Verwertung gegeben wurde.

## Patentansprüche

1. Verfahren zur Aufarbeitung von beladenen Filtern mit Mineralfasern enthaltenden Filtermedien, dadurch gekennzeichnet, daß man die Mineralfasern mit einer Fluor enthaltenden anorganischen Säure oder einer wäßrigen Lösung eines sauren Alkali- oder Ammoniumsalzes einer solchen Säure zersetzt und die Beladung von der Reaktionsmischung abtrennt.

2. Verfahren nach Anspruch 1, dadurch gekennzeichnet, daß man die Mineralfasern mit wäßriger Flußsäure zersetzt.

3. Verfahren nach Anspruch 2, dadurch gekennzeichnet, daß man eine 5 bis 40 Gew.-% HF enthaltende Flußsäure einsetzt.

4. Verfahren nach einem der vorgehenden Ansprüche, dadurch gekennzeichnet, daß man Filter einsetzt, die Blei als Beladung aufweisen.

5. Verfahren nach Anspruch 4, dadurch gekennzeichnet, daß man die Zersetzung in Anwesenheit eines Fällungsmittels für Blei, vorzugsweise Schwefelsäure, durchführt.

6. Verfahren nach Anspruch 4, dadurch gekennzeichnet, daß man als beladenen Filter mit Blei beladene Filterkassetten einsetzt.

7. Verfahren nach einem der vorhergehenden Ansprüche, dadurch gekennzeichnet, daß man das Verfahren unter Einwirkung von Ultraschall durchführt.

8. Verfahren nach einem der vorhgergehenden Ansprüche, dadurch gekennzeichnet, daß man zusätzlich ein Oxidationsmittel, vorzugsweise eine oxidierende Mineralsäure, insbesondere Salpetersäure, einsetzt.
